# FASCICULE DE BREVET EUROPEEN

(11) **EP 1 888 661 B1**
(45) Date de publication et mention de la délivrance du brevet: **22.09.2010**
(21) Numéro de dépôt: 06794436.3
(22) Date de dépôt: 18.05.2006
(51) Int. Cl.: C08F 220/54, C08F 290/04, G01N 27/447

(54) **NOUVEAU PROCEDE DE PREPARATION DE COPOLYMERES EN PEIGNE HYDROSOLUBLES**
NEUARTIGES VERFAHREN ZUR HERSTELLUNG WASSERLÖSLICHER UND KAMMFÖRMIGER COPOLYMERE
NOVEL METHOD FOR PRODUCING WATER-SOLUBLE COMB-SHAPED COPOLYMERS

(30) Priorité: 25.05.2005 FR 0551369
(43) Date de publication de la demande: 20.02.2008
(73) Titulaire: SOCIETE D'EXPLOITATION DE PRODUITS POUR LES INDUSTRIES CHIMIQUES, S.E.P.P.I.C., 75321 Paris Cédex 07 (FR); Institut Curie, 75248 Paris Cedex 05 (FR); Centre National de la Recherche Scientifique, 75016 Paris (FR)
(72) Inventeur: BRAUN, OLIVIER, F-81100 Castres (FR); MALLO, PAUL, F-78290 Croissy Sur Seine (FR); VIOVY, Jean Louis C/O INSTITUT CURIE, 6 Rue D'Ulm F-75248 Paris Cedex 05 (FR); WEBER, Jérémie C/O INSTITUT CURIE Direction de la, ue D'Ulm F-75248 Paris Cedex 05 (FR)
(74) Mandataire: Conan, Philippe Claude
(86) Numéro de dépôt international: PCT/FR2006/050452
(87) Numéro de publication internationale: WO 2007/000535

(56) Documents cités:
- WO-A-00/40958
- US-A- 5 885 432
- US-A1- 2004 084 310
- US-A1- 2004 101 970

## Description

La présente demande de brevet a pour objet un nouveau procédé de préparation copolymères greffés hydrosolubles.

Les demandes de brevet américain US 2004/0101970 A1 et US 2004/0101970 A1 divulguent une solution de traitement de surface destinée à l'analyse de fluide biologique par adsorption ou par electro-osmose, ladite solution comprenant un polymère "peigne" ayant au moins trois points de jonctions entre les segments de polymères.

La demande internationale WO 00/40958 décrit un procédé de préparation de copolymères d'acrylamide et de poly (N-isopropyl acrylamide) incluant les étapes successives suivantes :
(a) la synthèse d'un télomère de N-isopropyl acrylamide (NIPAM) par polymérisation radicalaire ;
(b) l'isolation du télomère obtenu, (NIPAM)ₓ-NH₂ par précipitation dans l'éther, filtration puis séchage ;
(c) la réaction dans le chlorure de méthylène, de (PNIPAM)ₓ-NH₂ avec un large excès d'acide acrylique en présence de cyclohexyl carbodiimide pour conduire au macro-monomère poly-(NIPAM) porteur d'une fonction acryle en bout de chaîne (PNIPAM)ₓ ;
(d) l'isolation du macro-monomère obtenu par précipitation dans l'éther, filtration puis séchage ;
(e) la copolymérisation du macro monomère obtenu avec de l'acrylamide (AM) ou du diméthylacrylamide (DMA) dans l'eau, pour obtenir les copolymères greffés à segment (PNIPAM)ₓ, AM-g-(PNIPAM)ₓ ou DMA-g-(PNIPAM)ₓ ;
(f) La purification par précipitation dans l'eau pour DMA/(PNIPAM)ₓ ou dans l'acétone pour AM/(PNIPAM)ₓ, puis ultrafiltration.

Dans le cadre de leur recherche sur une accession plus facile à ce type de polymères greffés, les demanderesses se sont attachées à développer un procédé de préparation de ces polymères, en limitant autant que faire se peut, l'utilisation de solvants organiques.

C'est pourquoi l'invention a pour objet un procédé de préparation d'un copolymère en peigne dont le squelette est du type acrylamide, acide acrylique, acryloylamino éthanol ou diméthylacrylamide, sur lequel sont greffés des segments latéraux poly(N-alkyl acrylamide) ou poly(N,N-dialkyl acrylamide), caractérisé en ce qu'il comprend les étapes successives suivantes
(a) La préparation d'un télomère poly(N-alkyl acrylamide) ou poly(N,N-dialkyl acrylamide), de formule (I) :

   H₂N-R₁-Z-{CH₂-C(R₂)[C(=O)N(R₃)(R₄)]-}ₙ-H (I)

   dans laquelle n représente un nombre entier supérieur ou égal à 2 et inférieur ou égal à 100, Z représente une fonction susceptible de jouer le rôle d'agent de transfert de radicaux, R₁ représente un radical divalent comportant de 1 à 4 atomes de carbone, R₂ un atome d'hydrogène ou un radical méthyle, R₃ un atome d'hydrogène ou un radical alkyle linéaire ou ramifié comportant de 1 à 4 atomes de carbone et R₄, identique ou différent de R₃, représente un radical alkyle linéaire ou ramifié comportant de 1 à 4 atomes de carbone, par réaction dans l'eau d'un composé de formule (II) :

   CH₂=C(R₂)-C(=O)N(R₃)(R₄) (II) :

   dans laquelle R₂, R₃ et R₄ sont tels que définis ci-dessus, avec un composé limiteur de chaîne de formule (III) :

   Z-R₁-NH₂ (III)

   dans laquelle Z représente une fonction susceptible de jouer le rôle d'agent de transfert de radicaux dans un rapport molaire (II) / (III) inférieur ou égal à n et supérieur ou égal à n/10, en présence d'un initiateur de polymérisation ;
(b) l'isolation du télomère de formule (I) obtenu à l'étape (a) ;
(c) la réaction dans l'eau du télomère de formule (I) obtenu à l'étape (b), avec le chlorure d'acide de formule (IV) :

   CH₂=C(R₅)-C(=O)-CI (IV)

   Dans laquelle R₅ représente un atome d'hydrogène ou un radical méthyle et dans un rapport molaire (IV) / (III) inférieur ou égal à 10 et supérieur ou égal à 1 tout en maintenant le pH du milieu réactionnel à une valeur comprise entre 6 et 13, et de préférence entre 7 et 8, pour obtenir un macromonomère de formule (V):

   CH₂=C(R₅)-C(=O)NH-R₁-Z-{CH₂-C(R₂)[C(=O)N(R₃)(R₄)]-}ₙ-H (V)
(d) l'isolation du macro-monomère de formule (V) obtenu à l'étape (c) ;
(e) la copolymérisation dans l'eau, du macromonomère de formule (V) isolé à l'étape (d), avec un monomère choisi parmi l'acrylamide, l'acide acrylique, l'acryloylaminoéthanol ou le diméthylacrylamide et si désiré,
(f) La purification du copolymère obtenu.

Dans les formules (I), (II) et (V) telles que définies précédemment, lorsque les radicaux R₃ et R₄ représentent un radical alkyle linéaire ou ramifié représentant de 1 à 4 atomes de carbone, il s'agit notamment des radicaux méthyle, éthyle, propyle, 1-méthyl éthyle (isopropyle), butyle, 2-méthyl propyle (isobutyle), 1-méthyl propyle (sec-butyle) ou 1,1-diméthyl éthyle (tert-butyle).

Selon un premier aspect préféré, dans les formules (I), (II) et (V), les radicaux R₃ et R₄ représentent chacun un radical isopropyle et le procédé tel que défini ci-dessus a donc pour objet la préparation d'un copolymère en peigne dont le squelette est du type acrylamide, acide acrylique, acryloylaminoéthanol ou diméthylacrylamide sur lequel sont greffés des segments latéraux poly(N-isopropyl acrylamide).

Dans les formules (I), (III) et (V) telles que définies précédemment, R₁ représente plus particulièrement un radical divalent alcane-di-yle tel que par exemple, un radical méthylène, 1,2-éthane-di-yle, 1,3-propane-diyle ou 1,4-butane-di-yle.

Selon un deuxième aspect préféré, le procédé tel que défini précédemment a pour objet la préparation d'un copolymère en peigne dont le squelette est du type acrylamide ou diméthylacrylamide, sur lequel sont greffés des segments latéraux poly(N-alkyl acrylamide) ou poly(N,N-dialkyl acrylamide).

Selon une première variante du procédé tel que défini précédemment, on met en oeuvre à la place des étapes (b) et (c), les étapes successives (b') et (c') suivantes :
(b') on ajuste le pH du milieu réactionnel issu de l'étape (a), sans isoler le télomère de formule (I), à une valeur comprise entre 6 et 13, et de préférence entre 7 et 8 ;
(c') on additionne au milieu réactionnel issu de l'étape (b'), le chlorure d'acide de formule (IV), dans un rapport molaire (IV) / (III) inférieur ou égal à 10 et supérieur ou égal à 1 en maintenant le pH dans l'intervalle indiqué à l'étape (b'), pour obtenir le macromonomère de formule (V).

Selon cette première variante telle que définie ci-dessus, les étapes (a) à (c'), sont de préférence réalisées en un seul pot.

Selon une deuxième variante du procédé tel que défini précédemment, le monomère, choisi parmi l'acrylamide, l'acide acrylique, l'acryloylaminoéthanol ou le diméthylacrylamide, est mélangé avec le milieu réactionnel issu de l'étape (c), sans mettre en oeuvre l'étape (d).

Selon cette deuxième variante du procédé telle que définie ci-dessus, les étapes (a), (c) et (e), sont réalisées en un seul pot.

Comme exemple de coplymère en peigne directement obtenu par le procédé objet de la présente invention, il y a un copolymère en peigne dont le squelette est du type acrylamide ou diméthylacrylamide, sur lequel sont greffés des segments latéraux poly(N,N-dialkyl acrylamide) et plus particulèrement un copolymère en peigne dont le squelette est du type acrylamide ou ou diméthylacrylamide, sur lequel sont greffés des segments latéraux poly(N,N-diméthyl acrylamide).

Les exemples suivants illustrent l'invention sans toutefois la limiter.

### Exemple 1 : Préparation d'un copolymère en peigne à squelette du type acrylamide, sur lequel sont greffés des segments latéraux poly(N-isopropyl acrylamide) AM-g-NIPAM.

### (1) Préparation d'un télomère poly(N-isopropyl acrylamide)

On verse dans un réacteur thermostaté, une solution aqueuse concentrée à 1,77 moles par litre de N-isopropyl acrylamide (NIPAM), que l'on agite sous barbotage d'azote pendant environ 1 heure et demi. On ajoute ensuite du chlorhydrate de 2-amino éthanethiol (AET.HCl) dans un rapport molaire NIPAM/AET.HCl déterminé variant de 30 à 75. Après 5 minutes d'homogénéisation, on ajoute une solution aqueuse à 17 % massique de persulfate d'ammonium à un débit de 0,35 g /min pendant environ 30 minutes, puis on laisse le milieu réactionnel sous agitation et barbotage d'azote pendant encore 2 heures. En fin de réaction, on effectue une chromatographie sur couche mince du milieu (éluant : mélange acétate d'éthyle - cyclohexane 6 / 4 v/v)) pour vérifier et constater l'absence de NIPAM.

L'analyse d'un échantillon du milieu réactionnel par chromatographie liquide haute performance (HPLC) permet de déterminer la quantité résiduelle de NIPAM de l'ordre de 1,5 % indiquant un taux de conversion supérieur à 92 %.

Le reste de l'échantillon est évaporé, dispersé dans le méthanol, ajusté à pH neutre par de la potasse méthanolique, filtré et précipité dans l'éther éthylique. On récupère le télomère sous forme solide sur lequel on réalise le dosage de l'alcalinité (dosage potentiométrique). Le milieu réactionnel obtenu comprend environ 16,4 % en poids de télomère poly(N-isopropyl acrylamide).

| Essai | NIPAM | AET.HCl | (NH₄)₂S₂O₈ | | Remarques |
|---|---|---|---|---|---|
| 1(a) | 47,8 eq | 1 eq | 1 % | Ajout brutal | Départ 20°C, apparition trouble |
| 1(b) | 47,8 eq | 1 eq | 1 % | Ajout 30 min | Départ 20°C, précipité blanc |
| 1(c) | 47,8 eq | 1 eq | 1 % | Ajout 30 min | Départ 20°C, précipité blanc |
| 1(d) | 47,8 eq | 1 eq | 1 % | Ajout 30 min | Départ 5°C, limpide |
| 1(e) | 30 eq | 1 eq | 1,6 % | Ajout 30 min | Départ 5°C, limpide |
| 1(f) | 75 eq | 1 eq | 0,67% | Ajout 30 min | Départ 5°C, limpide |

La quantité résiduelle de NIPAM est lors de tous ces essais, de l'ordre de 1,5 % indiquant un taux de conversion supérieur à 92 %.

### (2) Préparation du macromonomère

On ajoute au milieu réactionnel obtenu à l'étape (1) et comprenant environ 16,4 % en poids de télomère poly(N-isopropyl acrylamide), une solution aqueuse normale de potasse jusqu'à l'obtention d'un pH autour de 8. On verse ensuite goutte à goutte le chlorure d'acryloyle (AcrCl) (équivalence molaire déterminée par rapport au 2-amino éthanethiol introduit à l'étape précédente) dans le milieu maintenu à une température de 10°C et à un pH entre 7 et 8 par ajout de potasse normale . Après introduction du chlorure d'acide, on agite le milieu réactionnel pendant au moins 1 heure en rectifiant si nécessaire le pH.

En fin de réaction, un échantillon de solution est prélevé pour l'analyse par HPLC pour mesurer la teneur en acide acrylique (AA) résiduel. Le reste de l'échantillon est évaporé et après re dispersion dans le méthanol il est précipité dans l'éther éthylique. On récupère le macromonomère sous forme solide et l'on en dose l'alcalinité (dosage potentiométrique). On effectue plusieurs essais consignés dans le tableau suivant :

| Essai | télomère précurseur | AcrCl | AA résiduel mesuré par HPLC |
|---|---|---|---|
| 2(a) | 1(a) ; 1 eq. | 2 eq | 0,13 % |
| 2(b) | 1(b) ; 1 eq. | 3 eq | 0,24 % |
| 2(c) | 1(b) ; 1 eq. | 5 eq | 0,49 % |
| 2(d) | 1(c) ; 1 eq. | 10 eq | 0,36 % |
| 2(e) | 1(c) ; 1 eq. | 1,1 eq | 0,05 % |
| 2(f) | 1(d) ; 1 eq. | 1,1 eq | 0,05 % |
| 2(g) | 1(e) ; 1 eq. | 2 eq | 0,18 % |
| 2(h) | 1(f); 1 eq. | 2 eq | / |

Les rapports d'équivalence entre le télomère et le chlorure d'acryloyle ont été calculés sur la quantité d'AET.HCl introduit puisque aucune purification n'a eu lieu.

Le taux d'acylation est déterminé par dosage de l'alcalinité du macromonomère purifié. La même remarque que précédemment peut être faite dans la mesure où l'extraction du macromonomère s'avère difficile. Le dosage de l'acide acrylique résiduel résultant de l'hydrolyse de l'excès de chlorure d'acryloyle a également été réalisé.

### (3) Synthèse du copolymère

On ajoute au milieu réactionnel obtenu à l'étape 2 et dans le réacteur thermostaté à 15°C, une solution d'acrylamide (AM) à 50 % en poids puis on dilue le tout avec de l'eau permutée pour obtenir une concentration en monomères d'environ 10 % massique dans des proportions déterminées. On applique un barbotage d'azote pendant 2 heures par le fond du réacteur. On ajoute le persulfate d'ammonium (0,18 % en poids par rapport aux monomères) suivi par une solution de métabisulfite de sodium (0,43 % en poids par rapport aux monomères) pendant 30 minutes et le milieu est laissé sous agitation pendant 4h en maintenant la température inférieure ou égale à 30°C.

Après précipitation dans l'acétone, lavage, filtration et séchage on obtient le copolymère recherché.

On en prépare des échantillons de solution aqueuse à 5% pour évaluer les performances thermo-épaississantes. On effectue plusieurs essais consignés dans le tableau suivant :

| Essai | Macromonomère précurseur | AM | (NH₄)₂S₂O₈ | Na₂S₂O₅ |
|---|---|---|---|---|
| 3(a) | 2(a) ; 12,5 % en poids | 87,5 % en poids | 645 ppm | 210 ppm en 30 min |
| 3(b) | 2(b) ; 12,5 % en poids | 87,5 % en poids | 645 ppm | 210 ppm en 30 min |
| 3(c) | 2(c); 12,5 % en poids | 87,5 % en poids | 645 ppm | 210 ppm en 30 min |
| 3(d) | 2(d) ; 12,5 % en poids | 87,5 % en poids | 645 ppm | 210 ppm en 30 min |
| 3(e) | 2(e) ; 12,5 % en poids | 87,5 % en poids | 645 ppm | 210 ppm en 30 min |
| 3(f) | 2(f); 22,2 % en poids | 77,8 % en poids | 645 ppm | 210 ppm en 30 min |
| 3(g) | 2(g) ; 12,5 % en poids | 87,5 % en poids | 645 ppm | 210 ppm en 30 min |
| 3(h) | 2(h); 12,5 % en poids | 87,5 % en poids | 645 ppm | 210 ppm en 30 min |

Dans ces essais, le taux d'acrylamide résiduel avoisine les 1.000 ppm.

### Exemple 2 : Préparation d'un copolymère en peigne à squelette du type acrylamide sur lequel sont greffés des segments latéraux poly(N,N-diméthyl acrylamide).

### (1) Préparation d'un télomère poly(N,N-diméthyl acrylamide)

Ce télomère est obtenu selon la méthode décrite à l'étape (1) de l'exemple 1 à partir de N,N-diméthyl acrylamide (DMAM) et leurs données particulières consignées dans le tableau suivant :

| Essai | rapport molaire DMAM /AET.HCl | (NH₄)₂S₂O₈ | |
|---|---|---|---|
| 4(a) | 300/1 | 1 % | Ajout en 30 minutes |
| 4(b) | 300/1 | 1 % | Ajout en 30 minutes |
| 4(c) | 75/1 | 1 % | Ajout en 30 minutes |
| 4(d) | 75/1 | 1 % | Ajout brutal |
| 4(e) | 300/1 | 1 % | |

On obtient, à l'issu de la polymérisation, un télomère en solution dans l'eau à une concentration de 16,2%.

### (2) Préparation du macromonomère

Ce macromonomère est obtenu selon la méthode décrite à l'étape (2) de l'exemple 1. à partir de la solution aqueuse de télomère de poly(N,N-diméthyl acrylamide) obtenue à l'étape (1) ; on obtient une solution aqueuse à 15,6 % en poids de macromonomère.

En fin de réaction, un échantillon de solution est prélevé pour l'analyse, par HPLC pour mesurer la teneur en acide acrylique (AA) résiduel. Le reste de l'échantillon est évaporé et après re dispersion dans le méthanol il est précipité dans l'éther. On récupère le macromonomère sous forme solide et l'on en dose l'alcalinité (dosage potentiométrique). On effectue plusieurs essais consignés dans le tableau suivant :

| Essai | télomère précurseur | AcrCl |
|---|---|---|
| 5(a) | 4(a) ; 1 eq. | 2 eq |
| 5(b) | 4(b) ; 1 eq. | 2 eq |
| 5(c) | 4(c) ; 1 eq. | 2 eq |
| 5(d) | 4(d) ; 1 eq. | 2 eq |
| 5(e) | 4(e) ; 1 eq. | 2 eq |

### (3) Synthèse du copolymère

A partir de solutions aqueuses de macromonomères de DMAM obtenues à l'étape (2) précédente et non purifiées, plusieurs copolymères ont été synthétisés. Les essais sont consignés dans le tableau suivant :

| Essai | macromonomère initial | rapport AM/ macromonomère en poids | 1 - Amorçage ; 2 - Agent de transfert ; 3 - pH du milieu |
|---|---|---|---|
| 6(a) | 5(e) | 77 / 11 | 1 - (NH₄)₂S₂O₈ 500 ppm + Na₂S₂O₅ 500 ppm (débit 4,6 ppm/min) ; 2 - 0 % 3-pH=6,65 |
| 6(b) | 5(e) | 77/11 | 1 - (NH₄)₂S₂O₈ 500 ppm + TEMED* 1000 ppm ; 2 - 0 % ; 3-pH=6,5 |
| 6(c) | 5(e) | 77/11 | 1 - (NH₄)₂S₂O₈ 1000 ppm + TEMED 5000ppm; 2-0%; 3-pH=6,65 |
| 6(d) | 5(a) | 92/8 | 1 - (NH₄)₂S₂O₈ 500 ppm + Na₂S₂O₅ 500 ppm ; 2 - 0 % |
| 6(e) | 5(b) | 92/8 | 1-(NH₄)₂S₂O₈ 500 ppm + Na₂S₂O₅ 500 ppm 2 - 0 % |
| 6(f) | 5(b) | 92/8 | 1-(NH₄)₂S₂O₈ 1000 ppm à 75°C ; 2 - 0% |
| 6(g) | 5(b) | 92/8 | 1 - (NH₄)₂S₂O₈ 1000 ppm à 75 °C ; 2 - NaH₂PO₂ 50 ppm |
| 6(h) | 5(b) | 92/8 | 1 - (NH₄)₂S₂O₈ 1000 ppm à 75 °C ; 2 - NaH₂PO₂ 2000 ppm |
| 6(i) | 5(b) | 92/8 | 1 - (NH₄)₂S₂O₈ 1000 ppm à 75 °C ; 2 - NaH₂PO₂ 1000 ppm |
| 6(j) | 5(b) | 92/8 | 1 - (NH₄)₂S₂O₈ 1000 ppm à 75 °C ; 2 - NaH₂PO₂ 250 ppm |
| 6(k) | 5(c) | 92/8 | 1 - (NH₄)₂S₂O₈ 500 ppm + Na₂S₂O₅ 500 ppm ; 2 - 0 % |
| 6(I) | 5(d) | 92/8 | 1-(NH₄)₂S₂O₈ 500 ppm + Na₂S₂O₅ 500 ppm ; 2 - 0 % |
| 6(m) | 5(c) | 87,5/12,5 | 1 - (NH₄)₂S₂O₈ 500 ppm ; 500 ppm + % Na₂S₂O₅ 500 ppm ; 2 - 0 % |
| 6(n) | 5(d) | 87,5/12,5 | 1 - (NH₄)₂S₂O₈ 500 ppm + Na₂S₂O₅ 500 ppm ; 2 - 0 % |

| | | | |
|---|---|---|---|
| * TEMED: tetraméthyléthylènediamine | | | |

Viscosités de solutions aqueuses à 3 % en poids de polymères en peigne.

| polymères | Viscosité Viscosimètre Brookfield vitesse : 5 tours par minute ; mobile M5 ou M6 selon les valeurs attendues |
|---|---|
| 6(d) | 9500 mPa.s |
| 6(e) | très élevée |
| 6(f) | très élevée |
| 6(g) | très élevée |
| 6(h) | 80 mPa.s |
| 6(i) | 120 mPa.s |
| 6(j) | 400 mPa.s |
| 6(k) | 760 mPa.s |
| 6(l) | 7500 mPa.s |
| 6(m) | 290 mPa.s |
| 6(n) | 400 mPa.s |

## Revendications

1. Procédé de préparation d'un copolymère en peigne dont le squelette est du type acrylamide, acide acrylique, acryloylamino éthanol ou diméthyl acrylamide, sur lequel sont greffés des segments latéraux poly(N-alkyl acrylamide) ou poly(N,N-dialkyl acrylamide), **caractérisé en ce qu'**il comprend les étapes successives suivantes :
(a) La préparation d'un télomère poly(N-alkyl acrylamide) ou poly(N,N-dialkyl acrylamide), de formule (I) :
H₂N-R₁-Z-{CH₂-C(R₂)[C(=O)N(R₃)(R₄)]-}ₙ-H (I)
dans laquelle n représente un nombre entier supérieur ou égal à 2 et inférieur ou égal à 100, Z représente une fonction susceptible de jouer le rôle d'agent de transfert de radicaux, R₁ représente un radical divalent comportant de 1 à 4 atomes de carbone, R₂ un atome d'hydrogène ou un groupement méthyle, R₃ un atome d'hydrogène ou un radical alkyle linéaire ou ramifié comportant de 1 à 4 atomes de carbone et R₄, identique ou différent de R₃, représente un radical alkyle linéaire ou ramifié comportant de 1 à 4 atomes de carbone, par réaction dans l'eau d'un composé de formule (II) :
CH₂=C(R₂)-C(=O)-N(R₃)(R₄) (II) :
dans laquelle R₂, R₃ et R₄ sont tels que définis ci-dessus, avec un composé limiteur de chaîne de formule (III) :
Z-R₁-NH₂ (III)
dans laquelle Z représente une fonction susceptible de jouer le rôle d'agent de transfert de radicaux dans un rapport molaire (II) / (III) inférieur ou égal à n et supérieur ou égal à n/10, en présence d'un initiateur de polymérisation ;
(b) l'isolation du télomère de formule (I) obtenu à l'étape (a) ;
(c) la réaction dans l'eau du télomère de formule (I) obtenu à l'étape (b), avec le chlorure d'acide de formule (IV) :
CH₂=C(R₅)-C(=O)-Cl (IV)
dans laquelle R₅ représente un atome d'hydrogène ou un radical méthyle et dans un rapport molaire (IV) / (III) inférieur ou égal à 10 et supérieur ou égal à 1 tout en maintenant le pH du milieu réactionnel à une valeur comprise entre 6 et 13, et de préférence entre 7 et 8, pour obtenir un macromonomère de formule (V):
CH₂=C(R₅)-C(=O)NH-R₁-Z-{CH₂-C(R₂)[C(=O)N(R₃)(R₄)]-}ₙ-H (V)
(d) l'isolation du macro-monomère de formule (V) obtenu à l'étape (c) ;
(e) la copolymérisation dans l'eau, du macro monomère de formule (V) isolé à l'étape (d), avec un monomère choisi parmi l'acrylamide, l'acide acrylique, l'acryloylaminoéthanol ou le diméthylacrylamide et si désiré,
(f) La purification du copolymère obtenu.

2. Procédé tel que défini à la revendication 1, pour la préparation d'un copolymère en peigne dont le squelette est du type acrylamide, acide acrylique, acryloylaminoéthanol ou diméthylacrylamide sur lequel sont greffés des segments latéraux poly(N-isopropyl acrylamide).

3. Procédé tel que défini à l'une des revendications 1 ou 2, pour la préparation d'un copolymère en peigne dont le squelette est du type acrylamide ou diméthylacrylamide, sur lequel sont greffés des segments latéraux poly(N-alkyl acrylamide) ou poly(N,N-dialkyl acrylamide).

4. Variante du procédé tel que défini à l'une des revendications 1 à 3, dans laquelle :
(b') on ajuste le pH du milieu réactionnel issu de l'étape (a), sans isoler le télomère de formule (I), à une valeur comprise entre 6 et 13, et de préférence entre 7 et 8
(c') on additionne au milieu réactionnel issu de l'étape (b'), le chlorure d'acide de formule (IV), dans un rapport molaire (IV) / (III) inférieur ou égal à 10 et supérieur ou égal à 1 en maintenant le pH dans l'intervalle indiqué à l'étape (b'), pour obtenir le macromonomère de formule (V).

5. Variante du procédé telle que définie à la revendication 4, dans laquelle les étapes (a) à (c'), sont réalisées en un seul pot.

6. Variante du procédé tel que défini à l'une des revendications 1 à 3, selon laquelle le monomère, choisi parmi l'acrylamide, l'acide acrylique, l'acry loylaminoéthanol ou le diméthylacrylamide, est mélangé avec le milieu réactionnel issu de l'étape (c), sans mettre en oeuvre l'étape (d).

7. Variante telle que définie à la revendication 6, dans laquelle les étapes (a), (c) et (e) sont réalisées en un seul pot.

## Claims

1. Process for preparing a comb copolymer of which the backbone is of the acrylamide, acrylic acid, acryloylaminoethanol or dimethylacrylamide type, grafted onto which are poly(N-alkylacrylamide) or poly(N,N-dialkylacrylamide) side segments, **characterized in that** it comprises the following successive steps:
(a) preparation of a poly(N-alkylacrylamide) or poly(N,N-dialkylacrylamide) telomer of formula (I):
H₂N-R₁-Z-{CH₂-C(R₂) [C(=O)N(R₃) (R₄)]-}ₙ-H (I)
in which n represents an integer greater than or equal to 2 and less than or equal to 100, Z represents a functional group capable of acting as a radical transfer agent, R₁ represents a divalent radical comprising from 1 to 4 carbon atoms, R₂ a hydrogen atom or a methyl group, R₃ a hydrogen atom or a linear or branched alkyl radical comprising from 1 to 4 carbon atoms and R₄, being identical to or different from R₃, represents a linear or branched alkyl radical comprising from 1 to 4 carbon atoms, by reaction in water of a compound of formula (II):
CH₂=C(R₂)-C(=O)-N(R₃)(R₄) (II):
in which R₂, R₃ and R₄ are as defined above, with a chain-limiting compound of formula (III):
Z-R₁-NH₂ (III)
in which Z represents a functional group capable of acting as a radical transfer agent in a (II)/(III) molar ratio less than or equal to n and greater than or equal to n/10, in the presence of a polymerization initiator;
(b) isolation of the telomer of formula (I) obtained in step (a);
(c) reaction, in water, of the telomer of formula (I) obtained in step (b), with the acid chloride of formula (IV):
CH₂=C(R₅)-C(=O)-C1 (IV)
in which R₅ represents a hydrogen atom or a methyl radical, and in a (IV)/(III) molar ratio less than or equal to 10 and greater than or equal to 1 while keeping the pH of the reaction medium at a value between 6 and 13, preferably between 7 and 8, in order to obtain a macromonomer of formula (V):
CH₂=C(R₅)-C(=O)NH-R₁-Z-{CH₂-C(R₂) [C(=O)N(R₃) (R₄)] -}ₙ-H (V)
(d) isolation of the macromonomer of formula (V) obtained in step (c);
(e) copolymerization, in water, of the macromonomer of formula (V) isolated in step (d) with a monomer chosen from acrylamide, acrylic acid, acryloylaminoethanol or dimethylacrylamide; and if desired
(f) purification of the copolymer obtained.

2. Process as defined in Claim 1, for preparing a comb copolymer of which the backbone is of the acrylamide, acrylic acid, acryloylaminoethanol or dimethylacrylamide type, grafted onto which are poly(N-isopropylacrylamide) side segments.

3. Process as defined in either of Claims 1 and 2, for preparing a comb copolymer of which the backbone is of the acrylamide or dimethylacrylamide type, grafted onto which are poly(N-alkylacrylamide) or poly(N,N-dialkylacrylamide) side segments.

4. Variant of the process as defined in one of Claims 1 to 3, in which:
(b') the pH of the reaction medium derived from step (a), without isolating the telomer of formula (I), is adjusted to a value between 6 and 13, and preferably between 7 and 8; and
(c') added to the reaction medium derived from step (b') is the acid chloride of formula (IV) in a (IV)/(III) molar ratio less than or equal to 10 and greater than or equal to 1 while keeping the pH in the range indicated in step (b'), in order to obtain the macromonomer of formula (V).

5. Variant of the process, as defined in Claim 4, in which the steps (a) to (c') are carried out in a single vessel.

6. Variant of the process as defined in one of Claims 1 to 3, according to which the monomer, chosen from acrylamide, acrylic acid, acryloylaminoethanol or dimethylacrylamide, is mixed with the reaction medium derived from step (c) without carrying out step (d).

7. Variant as defined in Claim 6, in which the steps (a), (c) and (e) are carried out in a single vessel.

## Patentansprüche

1. Verfahren zur Herstellung eines Kammcopolymers mit einer Hauptkette vom Acrylamid-, Acrylsäure-, Acryloylaminoethanol- oder Dimethylacrylamid-Typ, auf die seitliche Poly(N-alkylacrylamid)- oder Poly(N,N-dialkylacrylamid)-Segmente aufgepfropft sind, **dadurch gekennzeichnet, daß** es die folgenden Schritte umfaßt:
(a) Herstellung eines Poly(N-alkylacrylamid)- oder Poly(N,N-dialkylacrylamid)-Telomers der Formel (I):
H₂N-R₁-Z-{CH₂-C(R₂) [C(=O)N(R₃) (R₄)]-}ₙ-H (I)
worin n für eine ganze Zahl größer gleich 2 und kleiner gleich 100 steht, Z für eine Funktion steht, die als Radikalübertragungsmittel fungieren kann, R₁ für einen zweiwertigen Rest mit 1 bis 4 Kohlenstoffatomen steht, R₂ für ein Wasserstoffatom oder eine Methylgruppe steht, R₃ für ein Wasserstoffatom oder einen linearen oder verzweigten Alkylrest mit 1 bis 4 Kohlenstoffatomen steht und R₄ mit R₃ identisch oder davon verschieden ist und für einen linearen oder verzweigten Alkylrest mit 1 bis 4 Kohlenstoffatomen steht, durch Umsetzung einer Verbindung der Formel (II):
CH₂=C(R₂)-C(=O)-N(R₃)(R₄) (II)
worin R₂, R₃ und R₄ die oben angegebene Bedeutung besitzen, in Wasser mit einer Kettenabbruchverbindung der Formel (III):
Z-R₁-NH₂ (III)
worin Z für eine Funktion steht, die als Radikalübertragungsmittel fungieren kann, in einem (II)/(III)-Molverhältnis kleiner gleich n und größer gleich n/10 in Gegenwart eines Polymerisationsinitiators;
(b) Isolierung des in Schritt (a) erhaltenen Telomers der Formel (I);
(c) Umsetzung des in Schritt (b) erhaltenen Telomers der Formel (I) in Wasser mit dem Säurechlorid der Formel (IV):
CH₂=C(R₅)-C(=O)-C1 (IV)
worin R₅ für ein Wasserstoffatom oder einen Methylrest steht, in einem (TV)/(III)-Molverhältnis kleiner gleich 10 und größer gleich 1 unter Halten des pH-Werts des Reaktionsmediums bei einem Wert zwischen 6 und 13 und vorzugsweise zwischen 7 und 8, zu einem Makromonomer der Formel (V):
CH₂=C(R₅)-C(=O)NH-R₁-Z-{CH₂-C(R₂)[C(=O)N(R₃)(R₄)]-}ₙ-H (V)
(d) Isolierung des in Schritt (c) erhaltenen Makromonomers der Formel (V);
(e) Copolymerisation des in Schritt (d) isolierten Makromonomers der Formel (V) in Wasser mit einem unter Acrylamid, Acrylsäure, Acryloylaminoethanol oder Dimethylacrylamid ausgewählten Monomer und gegebenenfalls
(f) Reinigung des erhaltenen Copolymers.

2. Verfahren nach Anspruch 1 zur Herstellung eines Kammcopolymers mit einer Hauptkette vom Acrylamid-, Acrylsäure-, Acryloylaminoethanol- oder Dimethylacrylamid-Typ, auf die seitliche Poly(N-isopropylacrylamid)-Segmente aufgepfropft sind.

3. Verfahren nach einem der Ansprüche 1 oder 2 zur Herstellung eines Kammcopolymers mit einer Hauptkette vom Acrylamid- oder Dimethylacrylamid-Typ, auf die seitliche Poly(N-alkylacrylamid)- oder Poly(N,N-dialkylacrylamid)-Segmente aufgepfropft sind.

4. Variante des Verfahrens nach einem der Ansprüche 1 bis 3, bei dem man:
(b'): den pH-Wert des Reaktionsmediums aus Schritt (a) ohne Isolierung des Telomers der Formel (I) auf einen Wert zwischen 6 und 13 und vorzugsweise zwischen 7 und 8 einstellt und
(c'): dem Reaktionsmedium aus Schritt (b') das Säurechlorid der Formel (IV) in einem (IV)/(III)-Molverhältnis kleiner gleich 10 und größer gleich 1 unter Halten des pH-Werts in dem in Schritt (b') angegebenen Intervall zugibt, was das Makromonomer der Formel (V) ergibt.

5. Variante des Verfahrens nach Anspruch 4, bei dem man die Schritte (a) bis (c') in einem Topf durchführt.

6. Variante des Verfahrens nach einem der Ansprüche 1 bis 3, bei dem man das unter Acrylamid, Acrylsäure, Acryloylaminoethanol oder Dimethylacrylamid ausgewählte Monomer ohne Durchführung von Schritt (d) mit dem Reaktionsmedium aus Schritt (c) mischt.

7. Variante nach Anspruch 6, bei dem man die Schritte (a), (c) und (e) in einem Topf durchführt.
